# FASCICULE DE BREVET EUROPEEN

(11) **EP 1 714 688 B1**
(45) Date de publication et mention de la délivrance du brevet: **02.01.2008**
(21) Numéro de dépôt: 06290584.9
(22) Date de dépôt: 11.04.2006
(51) Int. Cl.: B01D 29/21, B01D 35/153

(54) **Filtre à huile à vidange automatique**
Ölfilter mit automatischer Entleerung
Oil Filter with self-acting drain

(30) Priorité: 20.04.2005 FR 0503960
(43) Date de publication de la demande: 25.10.2006
(73) Titulaire: FILTRAUTO, 78286 Guyancourt Cedex (FR)
(72) Inventeur: Brisson, Marc, 93350 Le Bourget (FR)
(74) Mandataire: Garel, Régis

(56) Documents cités:
- EP-A- 1 479 427
- WO-A-20/04031542
- DE-A1- 3 903 675
- US-B1- 6 569 326
- US-B1- 6 685 829
- US-B1- 6 706 181

## Description

La présente invention se rapporte au domaine technique des filtres à huile pour moteurs à combustion interne.

Lorsqu'un opérateur veut changer l'élément filtrant, il est souhaitable qu'il ne reçoive pas de projections d'huile et que l'huile ne s'écoule pas sur les parois externes du carter de filtre et sur les autres organes moteurs.

Il est également souhaitable qu'une quantité minimale d'huile soit perdue lors du changement de l'élément filtrant.

La protection de l'environnement implique de veiller, par ailleurs, à ce que le changement de l'élément filtrant n'entraîne pas la mise au rebut d'une grande quantité de matériaux, et que les matériaux mis au rebut lors du changement de filtre soient recyclables et/ou valorisables avant mise en déchet ultime.

Les éléments filtrants sont conventionnellement des cartouches de forme annulaire, comprenant un papier filtre plissé ou matériau analogue, souvent monté sur un support cylindrique rigide.

L'huile à filtrer est amenée en regard du papier plissé et passe au travers de cette paroi filtrante.

L'huile filtrée aboutit dans l'espace creux défini par le support de la cartouche, ce support étant pourvu de trous à cette fin.

La cartouche est conventionnellement placée dans un carter ou boîtier comprenant une cuve et un capot fixé de manière amovible sur cette cuve, typiquement par vissage, des moyens assurant l'étanchéité du montage du capot sur la cuve.

On connaît dans l'art antérieur des moyens permettant la vidange du boîtier lors du changement de la cartouche filtrante.

Selon un premier type de conception, la vidange est effectuée axialement : le canal de vidange est placé, dans cette conception, dans le prolongement du conduit d'évacuation de l'huile filtrée.

L'idée d'une vidange axiale d'un filtre à huile, lors du changement de la cartouche, est en elle-même du domaine public, et illustrée par exemple dans le document GB 1 502 469, qui propose une vidange au travers d'une broche axiale fixant le couvercle à la cuve du boîtier de filtre.

Pour ce premier type de conception, on peut se reporter, par exemple, au document FR 2 834 650 de la demanderesse qui décrit un filtre à huile comprenant une cuve cylindrique d'axe vertical de révolution, sur lequel est vissé un couvercle, une chambre de filtration étant ainsi définie, chambre alimentée en huile à filtrer par un conduit excentré, le canal axial de sortie de l'huile filtrée communiquant avec le canal de vidange.

Un moyen élastique est placé entre le couvercle et la cartouche filtrante en papier plissé en zigzag, ou autre matériau analogue.

La cartouche filtrante est pourvue d'un flasque supérieur et d'un flasque inférieur annulaires.

Lorsque le couvercle est vissé sur la cuve, le moyen élastique, tel qu'un ressort spirale, exerce une contrainte axiale sur le flasque supérieur de la cartouche filtrante, en direction du fond de la cuve.

Une pièce dénommée obturateur est en appui, par sa première partie annulaire supérieure, contre le flasque inférieur de la cartouche filtrante. Cet obturateur comprend une deuxième partie inférieure en forme de tige à section cruciforme, montée coulissante dans le conduit axial d'évacuation de l'huile filtrée.

L'obturateur coulisse, lors du vissage/dévissage du couvercle, entre deux positions extrêmes. Une première position extrême, de fermeture, est obtenue lorsque le couvercle est en position vissée sur la cuve. L'obturateur est alors en position basse de fonctionnement du filtre et forme bouchon de fermeture pour l'orifice de liaison entre le canal d'évacuation de l'huile filtrée et le canal de vidange. La seconde position extrême de l'obturateur est obtenue lorsque le couvercle est ôté. L'obturateur, qui n'est alors plus contraint par la cartouche filtrante, est poussé en permanence par un second moyen élastique, par exemple un ressort spirale, vers sa position haute d'ouverture de l'orifice du canal de vidange. L'huile restant dans le boîtier s'écoule ainsi naturellement par le conduit d'évacuation axial, et passe par le canal de vidange.

Il est à noter que l'obturateur reste à demeure dans le boîtier. En effet, lorsque l'obturateur est poussé vers le haut par les seconds moyens élastiques, l'obturateur est pourvu dans sa deuxième partie inférieure de doigts élastiques qui viennent en butée contre une collerette rigide interne s'étendant radialement dans le conduit d'évacuation axial.

L'obturateur assure par ailleurs, dans sa position basse de fonctionnement du filtre, l'étanchéité entre l'entrée de l'huile à filtrer et le canal axial d'évacuation de l'huile filtrée. Il n'est ainsi pas nécessaire de prévoir un joint rapporté pour réaliser l'étanchéité radiale entre l'obturateur et la cuve, l'obturateur étant pourvu d'une collerette élastiquement déformable prenant appui sur une saillie annulaire du fond de la cuve, lorsque le couvercle est vissé sur la cuve.

Pour ce premier type de conception de vidange automatique axiale, l'on peut également se reporter au document EP 1 106 795, de la demanderesse, décrivant également un obturateur coulissant axialement entre deux positions extrêmes.

Du fait que l'obturateur reste fixé dans la cuve, l'enlèvement du couvercle nécessite peu de place au dessus de la cuve. Dans une variante de réalisation, l'obturateur est clipsé sur l'insert filtrant, de sorte que le retrait de cet insert entraîne la remontée de l'obturateur jusque vers sa deuxième position extrême haute.

Dans la réalisation du document FR 2 816 985, également issu de la demanderesse, l'obturateur reste fixé à l'insert filtrant lors du changement d'insert. On peut également se reporter au document EP 612 549.

Le document WO 02/11854 décrit un montage très proche de celui proposé dans le document EP 1 137 470, la broche d'évacuation n'étant toutefois pas sollicitée par un ressort pour occuper sa position d'ouverture, mais étant entraînée par coulissement, avant butée, par son encliquetage sur le support de filtre, de manière tout à fait semblable au montage divulgué par la demanderesse dans le document EP 1 106 795.

Selon un deuxième type de conception de vidange automatique de boîtier de filtre, lors du changement de cartouche filtrante, la vidange est dite décentrée, le canal de vidange n'étant pas en communication avec le conduit d'évacuation axial de l'huile filtrée.

La réalisation d'une vidange automatique lors du changement de cartouche, par une soupape non axiale maintenue en position fermée par appui de la cartouche, sous l'action d'un ressort placé entre le couvercle de filtre et la cartouche est en soi du domaine public et décrite par exemple dans les documents FR 2 566 045 ou DE-A-3903675.

De nombreux documents de brevets antérieurs décrivent des filtres à vidange décentrée. L'on peut se reporter, par exemple, aux documents EP 314 915, EP 421 080, EP 1 210 164, WO 98/32517, US 4 906 365, US 6 572 768, DE 3 933 794, DE 29 815 023 U.

L'invention se rapporte plus particulièrement à un filtre à huile pour moteur à combustion interne pourvu de moyens de vidange automatique, lors du changement d'insert, du deuxième type ci-dessus présenté.

La demanderesse s'est attachée à fournir un filtre à huile pour moteur à combustion interne qui soit de structure plus simple, moins coûteuse que celles existantes, et qui permette une vidange rapide et propre, et ce même lorsque le filtre est fortement incliné.

A ces fins, l'invention se rapporte, selon un premier aspect, à un filtre à huile, notamment pour moteur à combustion interne de véhicule automobile, ce filtre définissant une enceinte de filtration dans laquelle est logé un insert filtrant, l'enceinte de filtration étant en communication de fluide avec un conduit d'amenée d'huile à filtrer et un conduit d'évacuation de l'huile filtrée, ce filtre comprenant une cuve et un couvercle amovible sur cette cuve, l'insert filtrant définissant, dans sa position de filtration active dans l'enceinte de filtration un espace interne et un espace externe, l'espace interne étant en communication de fluide avec un conduit d'évacuation d'huile filtrée et l'espace externe étant en communication de fluide avec le conduit d'amenée d'huile à filtrer, un canal de vidange étant obturé lorsque le couvercle est en position montée sur la cuve, ce canal de vidange étant ouvert par suite du dévissage du couvercle, ce filtre comprenant une platine indépendante de l'insert filtrant et pourvue d'une partie tubulaire coulissant suivant l'axe du conduit d'évacuation de l'huile filtrée, cette platine comprenant en outre une saillie coulissant suivant l'axe du canal de vidange, le coulissement de la partie tubulaire et de la saillie étant obtenus simultanément lors de la mise en place ou de l'enlèvement du couvercle sur la cuve, le coulissement de la saillie suivant l'axe du canal de vidange assurant la fermeture de ce canal, lorsque le couvercle est en position de fermeture de l'enceinte, et assurant l'ouverture de ce canal de vidange ; lorsque le couvercle est ôté de la cuve, ladite platine étant montée à demeure dans la cuve.

La platine ne fera donc pas partie des pièces enlevées lors du changement de l'insert filtrant. Suivant diverses réalisations, le filtre présente les caractères suivants, le cas échéant combinés.

Par exemple, la platine est, lorsque le couvercle est ôté de la cuve, en butée contre un bord d'appui dont est pourvue la cuve. A cette fin, la platine comporte, dans une mise en oeuvre, des saillies sur sa partie tubulaire coulissante, ces saillies venant en appui contre ledit bord de la cuve. Dans une réalisation particulière, lesdites saillies sont externes et sensiblement radiales à la partie tubulaire coulissante en viennent en butée, lorsque le couvercle est ôté de la cuve, conte ledit bord de la cuve. Dans une autre mise en oeuvre, une pièce rapportée à la cuve forme ledit bord d'appui. Par exemple, ladite pièce rapportée est sertie dans la cuve et présente une section transversale en cornière.

Avantageusement, le filtre comporte des moyens permettant d'empêcher, lorsque le couvercle est ôté de la cuve, la rotation de la platine autour de l'axe de coulissement dans le canal d'évacuation d'huile filtrée de la partie tubulaire. Il est ainsi assuré que la saillie devant coulisser dans le canal de vidange se trouve toujours en bonne position par rapport à ce canal.

Dans une mise en oeuvre, lesdits moyens empêchant la rotation de la platine comprennent des parois, ménagées sur la saillie coulissante dans le canal de vidange, ces parois restant au moins en partie à l'intérieur du canal de vidange, lorsque le couvercle est ôté de la cuve, ces parois n'empêchant pas la vidange. Lesdites parois confèrent par exemple à la saillie coulissante dans le canal de vidange une section transversale cruciforme.

Le filtre présente les caractéristiques supplémentaires suivantes, le cas échéant combinées :
- le canal de vidange et le conduit d'évacuation de l'huile traitée sont sensiblement parallèles ;
- le conduit d'évacuation de l'huile traitée est sensiblement axial, c'est-à-dire s'étend suivant l'axe de révolution de l'insert filtrant ;
- le filtre comprend un by pass monté par clipsage sous le couvercle, l'insert filtrant étant poussé contre la platine par appui de ce by pass, en position montée du couvercle sur la cuve.
- aucun moyen élastique n'est placé entre le by-pass et l'insert filtrant, un moyen élastique assurant le coulissement de la platine par rapport à la cuve lors du retrait du couvercle, ce moyen élastique étant monté à demeure dans la cuve ;
- la saillie coulissante dans le canal de vidange est pourvue de moyens d'étanchéité axiale ou radiale
- la partie tubulaire de la platine coulisse dans le conduit d'évacuation de l'huile filtrée;
- un joint annulaire assure une étanchéité entre la partie tubulaire et le conduit d'évacuation de l'huile filtrée ;
- un ressort est interposé entre la cuve et la platine: ledit ressort sollicitant ladite platine vers l'insert filtrant.

D'autres objets et avantages de l'invention apparaîtront au cours de la description suivante de modes de réalisation, description qui va être effectuée en se référant aux dessins annexés dans lesquels :
- la figure 1 est une vue schématique en coupe longitudinale d'un filtre selon un mode de réalisation de l'invention, le couvercle étant en position fermée ;
- la figure 2 est une figure analogue à la figure 1, le couvercle étant en position ouverte ;
- la figure 3 est une vue de dessus de la platine de fermeture et, en pointillés d'une variante de réalisation de la platine de fermeture ;
- les figures 4 et 5 sont des vues de moyens d'étanchéité disposés sur la platine de fermeture ;
- la figure 6 est une vue schématique d'une variante de réalisation ;
- la figure 7 est une vue en coupe longitudinale d'un filtre selon un autre mode de réalisation de l'invention ;
- la figure 8 est une vue de détail du filtre de la figure 7, le canal de vidange étant en position fermée ;
- la figure 9 est une vue analogue à la figure 8, le canal de vidange étant en position ouverte ;
- la figure 10 est une vue en coupe longitudinale de détail du canal de vidange d'un filtre tel que représenté en figures 7 à 9.

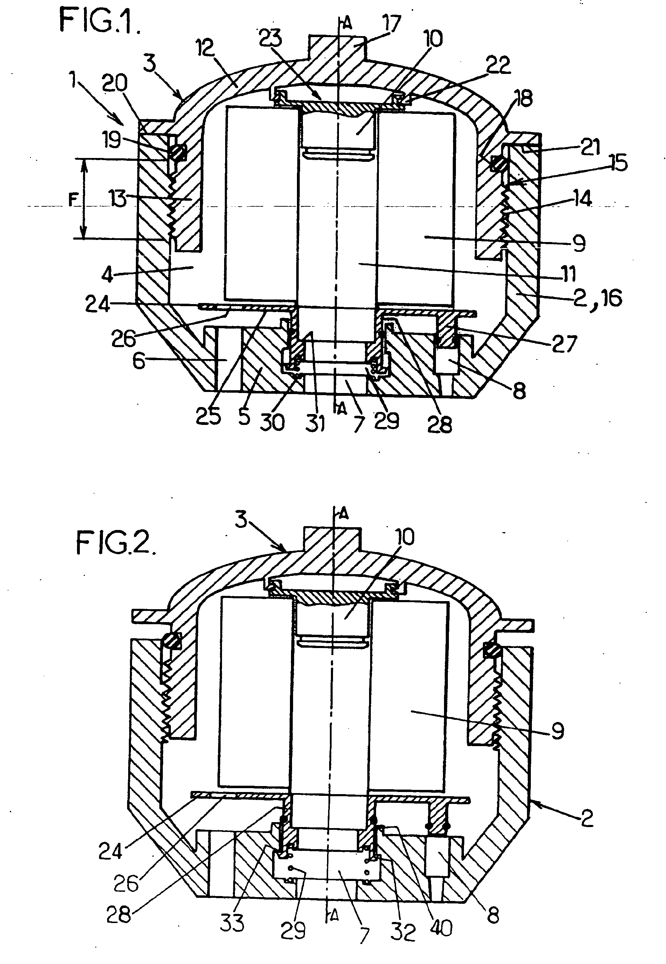

On se rapporte tout d'abord aux figures 1 et 2, qui représentent un mode de réalisation de l'invention, présenté à titre d'exemple non limitatif.

Le filtre à huile 1 représenté sur ces figures comprend une cuve 2 et un couvercle 3, définissant une enceinte de filtration 4.

La cuve 2 comprend une partie de fond 5 au travers de laquelle sont ménagés trois trous traversants définissant un conduit d'amenée 6 d'huile à filtrer, un conduit d'évacuation 7 d'huile filtrée, et un canal de vidange 8 pour l'écoulement de l'huile restant dans l'enceinte 4 lors du changement de l'insert filtrant 9.

Dans le mode de réalisation représenté, les trois trous traversants définissant les conduits 6, 7, et le canal 8 sont sensiblement parallèles, le conduit d'évacuation 7 de l'huile filtrée étant axial.

Le terme « axial » est ici employé en référence aux symétries de révolution que présentent, autour d'un axe AA vu en figure 1:
- l'insert filtrant 9, par exemple formé de papier plié en zigzag ;
- l'ensemble pontet/clapet by-pass 10 en appui sur la partie supérieure de l'insert filtrant 9 et s'étendant dans l'espace interne axial 11 formé par cet insert filtrant 9 ;
- le couvercle 3 qui comprend une partie supérieure bombée 12 prolongée par une jupe annulaire 13 pourvue d'un filetage externe 14 complémentaire d'un filetage interne 15 de la jupe annulaire 16 de la cuve 2.

Il est entendu ici que le couvercle pourrait être pourvu d'un filetage interne complémentaire d'un filetage externe de la jupe annulaire de la cuve.

Le couvercle 3 comprend, de manière connue en soi, en saillie externe, une former 17 par exemple hexagonale, facilitant le vissage/dévissage de ce couvercle 3 sur la cuve 2.

Le couvercle 3 est pourvu, sur sa jupe annulaire 13, d'une gorge externe 18 logeant un joint d'étanchéité 19. Lorsque le couvercle 3 est en position vissée sur la cuve 2, cette gorge 18 logeant le joint 19 est placée à une hauteur comprise entre la zone de filetage F des couvercle et cuve et l'appui annulaire 20 d'une saillie 21 du couvercle 3 contre le bord supérieur de la jupe 16 de la cuve.

La position de fermeture du couvercle 3 sur la cuve est ainsi parfaitement déterminée.

Lorsque le couvercle 3 est en position complètement vissée sur la cuve 2, le joint 19 est placé à une faible distance du bord supérieur de la jupe 16 de la cuve 2. L'instant de mise à l'air libre de l'enceinte de filtration 4, lors du dévissage du couvercle 3 est ainsi prédéterminé.

Le couvercle 3 est pourvu, sur sa face interne, de moyens de fixation 22 de l'ensemble pontet/by-pass 10, par exemple par clipsage. Ces moyens 22 sont connus en eux même et ne seront donc pas décrits en détail ici.

Il est à noter que, contrairement aux montages conventionnels, aucun moyen élastique n'est nécessaire dans l'espace 23 délimité par le couvercle 3 et l'ensemble pontet/by-pass 10. Il en résulte une économie de pièces et une structure simplifiée.

De plus l'absence de moyens élastiques entre le couvercle et l'ensemble pontet/ by-pass permet de supprimer toute course morte du couvercle par rapport à la platine 24. En effet, conformément à la présente invention, la platine 24 via le ressort de compression 29 est plaquée contre l'élément filtrant 9 lui-même en appui axial sur l'ensemble pontet/by-pass qui est en contact direct avec le couvercle.

De ce fait, la platine commence à se déplacer dès que l'on commence à dévisser le couvercle et la platine 24 a la même amplitude de déplacement axial que le couvercle. Ainsi, la saillie 27 qui s'étend axialement depuis la platine 24 pour fermer le canal de vidange 8 commence à se déplacer également dès que l'on commence à dévisser le couvercle 24 et subit également le même déplacement axial que le couvercle, ce qui permet d'ouvrir rapidement le canal de vidange lorsque l'on dévisse le couvercle.

Dans les montages conventionnels utilisant un élément élastique entre le couvercle et l'élément filtrant pour plaquer -ledit élément filtrant en fond de cuve, la course axiale du couvercle se décompose en deux parties. Lorsqu'on commence à dévisser le couvercle, la première partie de la course du couvercle est une course morte car elle ne permet pas de générer un déplacement axial de l'élément filtrant et de l'obturateur de vidange qui vient prendre appui directement ou indirectement sur l'élément filtrant. La deuxième partie de la course est une course active car elle permet de générer un déplacement axial de l'élément filtrant et de l'obturateur pour ouvrir le canal de vidange. Le passage de la course morte à la course active du couvercle se fait lorsque le couvercle, à l'aide d'une butée axiale, vient contacter et tirer l'élément filtrant. Dans les montages conventionnels, l'ouverture du canal de vidange est, par conséquent, retardée par la course morte du couvercle.

Lorsque le couvercle est en position fermée, illustrée en figure 1, la platine 24 exerce, via le ressort de compression 29, un effort axial sur l'élément filtrant 9 pour plaquer celui-ci axialement contre l'ensemble pontet/by-pass qui est lui-même en butée axiale contre le couvercle. En l'absence d'un ensemble pontet/by-pass, l'élément filtrant serait plaqué axialement par la platine 24 directement sur le couvercle.

L'effort axial exercé par la platine 24 sur l'insert filtrant 9 à l'encontre du pontet 10 permet de garantir les étanchéités entre la platine 24 et l'insert filtrant 9 d'une part et entre le pontet du by-pass et l'insert 9 filtrant d'autre part.

Les moyens d'étanchéité, utilisés pour permettre d'obtenir les étanchéités entre la platine 24 et l'insert filtrant 9 d'une part et entre le pontet du by-pass et l'insert filtrant 9 d'autre part, peuvent être par exemple :
- des joints toriques élastomères ;
- des joints feutres annulaires en matériau non tissé, soudés ou collés sur les faces radiales des flasques, ou encore ;
- des bourrelets annulaires hot-melt faisant saillie axialement depuis les faces radiales des flasques tels que décrits dans la demande de brevet EP 1 312 405 A1, lesdits bourrelets étant obtenus de fabrication avec les flasques. Du fait de l'effort axial de plaquage exercé par la platine 24 sur l'insert filtrant 9 et des contraintes ainsi générées, les bourrelets annulaires fluent à chaud (température de l'huile), pour l'un à l'encontre de la platine 24 et pour l'autre à l'encontre du pontet du by-pass. Le fluage des bourrelets annulaires permet d'obtenir une parfaite étanchéité.

La platine 24 comporte une partie supérieure 25, sensiblement plane, contre laquelle l'insert filtrant 9 est en appui, en position vissée du couvercle 3.

Un trou traversant 26 est ménagé dans cette partie supérieure 25, en regard de l'axe du conduit 6 d'amenée de l'huile à filtrer.

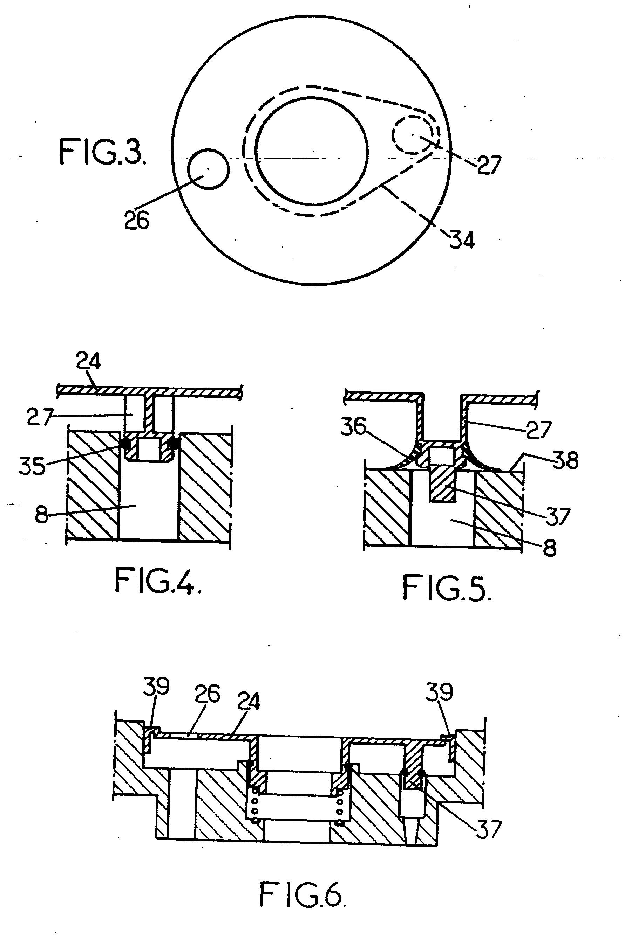

En regard du canal de vidange 8 et coulissant dans ce canal de vidange 8, la platine 24 est pourvue d'une saillie 27 pourvue de moyens d'étanchéité, moyens dont la structure sera décrite en détail par la suite en référence aux figures 4 et 5. Il est indiqué simplement pour l'instant que ces moyens peuvent être d'étanchéité radiale ou axiale.

La platine 24 est également pourvue d'une saillie tubulaire 28 coulissant dans le conduit d'évacuation 7 de l'huile filtrée. Ce coulissement est obtenu entre deux positions extrêmes, à savoir une première position de fermeture du canal de vidange 8, représentée en figure 1, et une seconde position, d'ouverture de ce canal de vidange 8, représentée en figure 2.

Un joint annulaire assure l'étanchéité externe de la partie tubulaire 28 contre la paroi du conduit d'évacuation 7.

Un moyen élastique tel qu'un ressort de compression spirale 29 a ses extrémités opposées logées respectivement dans une gorge annulaire 30 de la cuve 2, et une gorge annulaire 31 ménagée en regard de la gorge 30, dans la partie tubulaire 28 de la platine 24.

Ce moyen élastique 29 sollicite en permanence la platine 24 en direction de l'insert filtrant 9. Il est à noter que, lors du changement de l'insert filtrant 9, la platine 24 reste dans la cuve 2, des crochets radiaux 32 de la partie tubulaire 28 venant en butée, dans la seconde position de la platine 24, contre un bord 33 de la cuve 2.

Après le début de dévissage du couvercle 3, une faible course axiale du couvercle 3 suffit pour que le joint 19 arrive au dessus de l'appui 20, les filetages complémentaires 14,15 étant d'une hauteur axiale telle que le couvercle 3 n'est pas encore complètement dévissé de la cuve 2. La mise à l'air libre de l'enceinte de filtration est ainsi obtenue avant que le couvercle 3 ne puisse être ôté du filtre 1.

Il est à noter que l'ouverture du canal de vidange est obtenue peu de temps avant, ou sensiblement en même temps que mise à l'air libre de l'enceinte de filtration. Un petit nombre de tours de dévissage peut être suffisant pour ouvrir le canal de vidange 8. La vidange commence ainsi très tôt et avant que le couvercle 3 ne soit complètement dévissé, le volume d'huile contenu dans la chambre de filtration est complètement vidangé. Ainsi, lors du retrait de l'insert filtrant 9, on réduit considérablement les risques de projection d'huile sur l'opérateur et les risques d'écoulement d'huile sur les parois externes du carter de filtre et sur les autres organes moteurs.

Les moyens élastiques tels que ressort de compression 29 ont pour double fonction d'assurer le mouvement de la platine 24 lors du dévissage du couvercle 3 et de plaquer fermement cette platine 24 contre l'insert filtrant 9, lorsque le couvercle 3 est en position vissée sur la cuve 2.

Dans une réalisation avantageuse, le couvercle 3, la cuve 2 et la platine 24 sont en matière plastique ou composite.

L'on se reporte maintenant à la figure 3. Les traits pleins sur cette figure 3 se rapportent aux contours de la platine 24 telle que mise en oeuvre dans les réalisations des figures 1 et 2.

Dans la variante représentée en pointillés sur cette figure 3, la platine 24 comprend une partie supérieure plane 34 de dimensions plus réduite que dans le mode de réalisation des figures 1 à 3.

Dans certaines mises en oeuvre, la platine 24 est pourvue de moyens 37 permettant d'éviter son pivotement à l'intérieur de l'enceinte 4, lorsque le couvercle 3 est dévissé.

Ces moyens sont par exemple des croisillons 37 placés sur la saillie 27, tels que schématisés en figures 5 et 6, ces croisillons 37 restant logés dans le canal de vidange 8, lorsque la platine 24 est en position extrême haute d'ouverture, l'huile pouvant aisément s'écouler entre ces croisillons pour s'écouler dans le canal de vidange 8.

L'on se reporte maintenant aux figures 4 et 5.

Dans une première mise en oeuvre, la platine 24 est pourvue de moyens d'étanchéité radiale 35 montés sur la saillie 27 coulissant dans le canal de vidange 8. Un joint torique est par exemple monté dans une gorge annulaire de cette saillie 27. Il est à noter que cette saillie 27 peut être pleine ou de section cruciforme, comme représenté en figure 4.

Dans une deuxième mise en oeuvre, la platine 24 est pourvue de moyens d'étanchéité radiale et axiale 36, la partie inférieure de la saillie 27 ayant une section transversale cruciforme 37 telle que décrite auparavant, cette section 37 empêchant la rotation de la platine 24, autour de l'axe AA, lors du changement d'insert filtrant 9. Une lèvre d'étanchéité 36 souple peut ainsi être montée sur la saillie 27 de sorte à venir en appui contre la paroi de fond 38 de la cuve, autour du canal de vidange 8.

L'on se rapporte maintenant à la figure 6.

Dans cette mise en oeuvre particulière, une pièce annulaire 39 est sertie dans la cuve 2, cette pièce 39 présentant, en coupe longitudinale, une forme de cornière formant butée radiale contre laquelle la platine 24 vient en appui, dans sa seconde position. Il est à noter que, dans cette réalisation de la figure 6, la platine est, en position dévissée du couvercle 3, en butée contre une saillie annulaire 40 de la cuve 2, cette saillie 40 bordant le conduit d'évacuation 7 de l'huile filtrée.

La distance axiale entre cette saillie annulaire 40 et l'insert 39 est telle que la saillie 27 du type représentée en figures 4 à 6, reste en partie logée dans le canal de vidange 8, lorsque la platine 24 est en position haute. Le risque de rotation de la platine 24, autour de l'axe AA, lors du changement d'insert filtrant 9, est ainsi évité.

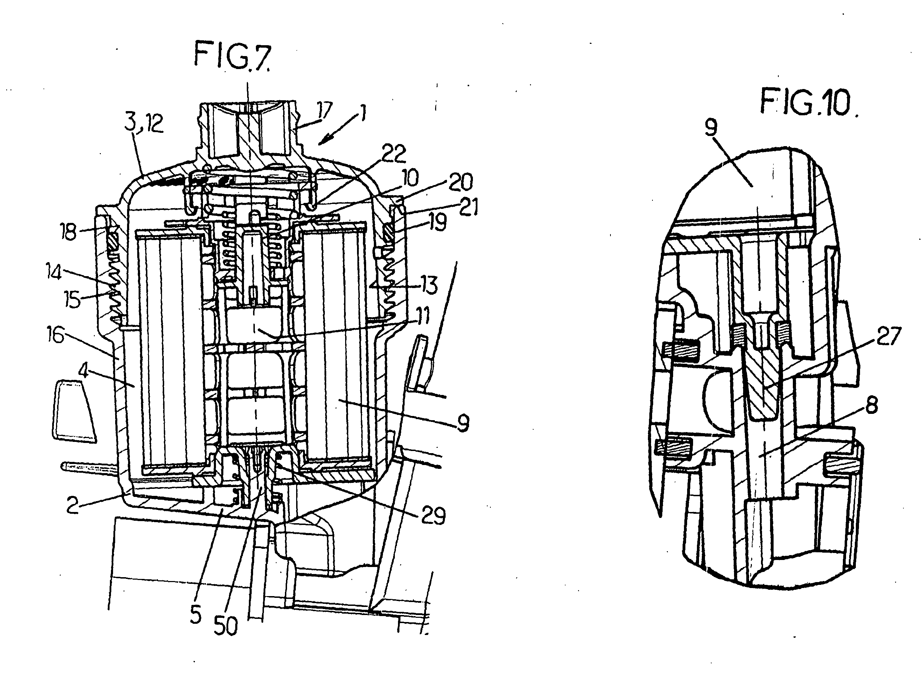

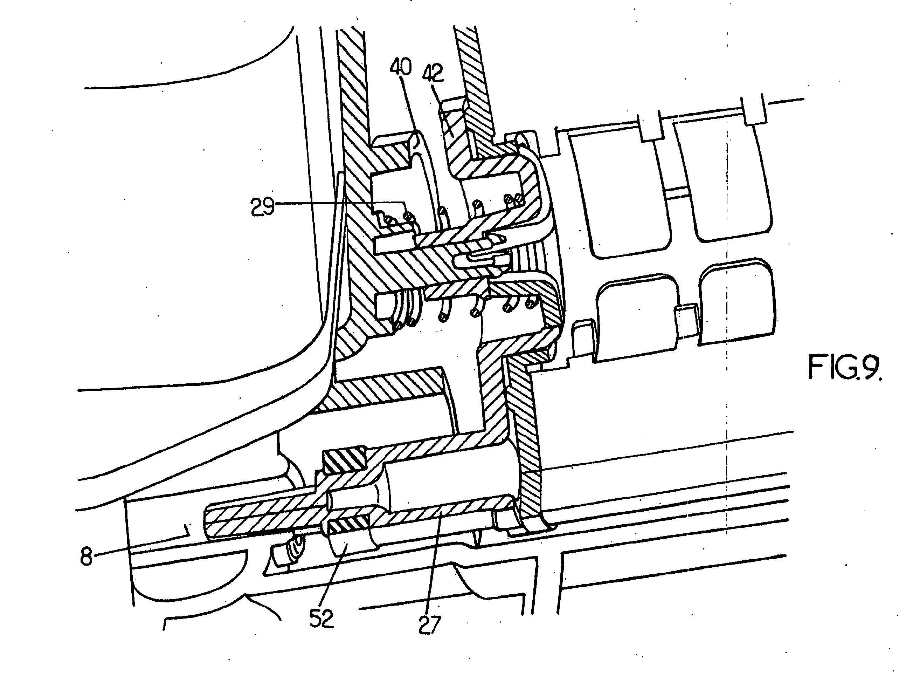

L'on se reporte maintenant aux figures 7 à 10.

Les éléments communs à ceux déjà décrits auparavant sont désignés par les mêmes numéros de référence, sur ces figures 7 à 10, et ne sont pas décrits à nouveau.

Ainsi qu'il apparaît sur ces figures 7 à 10, la partie de fond 5 de la cuve 2 est pourvue d'une saillie axiale 50 montée coulissante dans une partie tubulaire 28 de la platine 24.

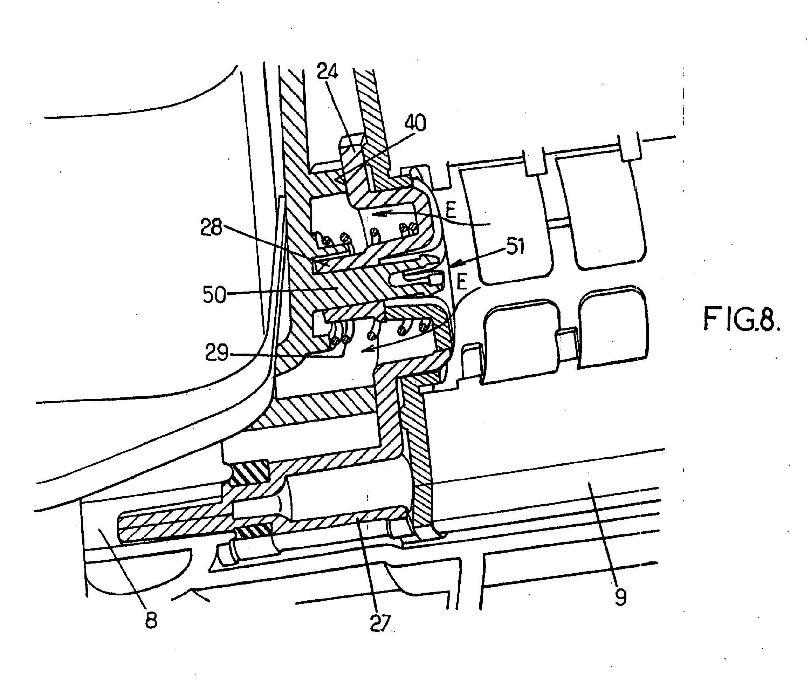

Lorsque le couvercle 3 est vissé sur la cuve 2, la platine 24 est en appui contre une saillie annulaire 40 et l'huile filtrée s'écoule au travers des lumières 51 de cette platine 24 (flèches E de la figure 8).

Le canal de vidange 8 est obturé par la saillie 27 de la platine 24, ainsi qu'il apparaît en figures 8 et 10.

Le dévissage du couvercle 3 permet le coulissement de la saillie 27 dans le canal de vidange 8. Un joint annulaire 52 en élastomère ou matériau analogue assure l'étanchéité entre la saillie 27 et le canal de vidange 8.

Ce joint annulaire 52 permet aussi de rattraper les variations dans les chaînes de cotes.

## Revendications

1. Filtre à huile, notamment pour moteur à combustion interne de véhicule automobile, ce filtre définissant une enceinte de filtration (4) dans laquelle est logé un insert filtrant (9), l'enceinte de filtration (4) étant en communication de fluide avec un conduit d'amenée (6) d'huile à filtrer et un conduit d'évacuation (7) de l'huile filtrée, ce filtre comprenant une cuve (2) et un couvercle (3) amovible sur cette cuve (2), l'insert filtrant (9) définissant, dans sa position de filtration active dans l'enceinte de filtration (4) un espace interne et un espace externe, l'espace interne (11) étant en communication de fluide avec un conduit d'évacuation (7) d'huile filtrée et l'espace externe étant en communication de fluide avec un conduit (6) d'amenée d'huile à filtrer, un canal de vidange (8) étant obturé lorsque le couvercle (3) est en position montée sur la cuve (2), ce canal de vidange (8) étant ouvert par suite de l'enlèvement du couvercle (3),
**caractérisé en ce qu'**il comprend une platine (24) indépendante de l'insert filtrant (9) et pourvue d'une partie tubulaire (28) coulissant suivant l'axe du conduit d'évacuation (7) de l'huile filtrée, cette platine (24) comprenant en outre une saillie (27) coulissant suivant l'axe du canal de vidange (8), le coulissement de la partie tubulaire (28) et de la saillie (27) étant obtenus simultanément lors de la mise en place ou de l'enlèvement du couvercle (3) sur la cuve (2), le coulissement de la saillie (27) suivant l'axe du canal de vidange (8) assurant la fermeture de ce canal (8), lorsque le couvercle (3) est en position de fermeture de l'enceinte (4), et assurant l'ouverture de ce canal de vidange (8) lorsque le couvercle (3) est ôté de la cuve (2), et **en ce que** ladite platine (24) est montée à demeure dans la cuve (2).

2. Filtre selon la revendication 1, dans lequel la platine (24) est, lorsque le couvercle (3) est ôté de la cuve (2), en butée conte un bord d'appui dont est pourvu la cuve (2).

3. Filtre selon la revendication 2, dans lequel la platine comporte des saillies sur sa partie tubulaire (28) coulissante, ces saillies venant en appui contre ledit bord d'appui de la cuve.

4. Filtre selon la revendication 3, dans lequel lesdites saillies sont externes et sensiblement radiales à la partie tubulaire (28) coulissante et viennent en butée, lorsque le couvercle est ôté de la cuve (2), contre ledit bord de la cuve (2).

5. Filtre selon l'une quelconque des revendications 2 à 4, dans lequel une pièce (39) rapportée à la cuve (2) forme ledit bord d'appui.

6. Filtre selon la revendication 5, dans lequel ladite pièce rapportée (39) est sertie dans la cuve et présente une section transversale en cornière.

7. Filtre selon l'une quelconque des revendications précédentes, comportant des moyens permettant d'empêcher, lorsque le couvercle (3) est ôté de la cuve (2), la rotation de la platine (24) autour de l'axe de coulissement dans le canal d'évacuation (7) d'huile filtrée de la partie tubulaire (28).

8. Filtre selon la revendication 7, dans lequel lesdits moyens empêchant la rotation de la platine (24) comprennent des parois, ménagées sur la saillie (27) coulissant dans le canal de vidange (8), ces parois restant au moins en partie à l'intérieur du canal de vidange (8), lorsque le couvercle (3) est ôté de la cuve (2), ces parois n'empêchant pas la vidange.

9. Filtre selon la revendication 8, dans lequel lesdites parois confèrent à la saillie (27) coulissant dans le canal de vidange une section transversale cruciforme.

10. Filtre selon l'une quelconque des revendications précédentes, dans lequel le canal de vidange (8) et le conduit d'évacuation (7) de l'huile traitée sont sensiblement parallèles.

11. Filtre selon la revendication 10, dans lequel le conduit d'évacuation (7) de l'huile traitée est sensiblement axial, c'est-à-dire s'étend suivant l'axe de révolution de l'insert filtrant (9).

12. Filtre selon l'une quelconque des revendications précédentes, comprenant un by-pass (10) monté par clipsage sous le couvercle (3), l'insert filtrant (9) étant poussé contre la platine (24) par appui de ce by pass (10), en position montée du couvercle (3) sur la cuve (2).

13. Filtre selon la revendication 12, dans lequel aucun moyen élastique n'est placé entre le by-pass (10) et l'insert filtrant (9), et un moyen élastique (29) assure le coulissement de la platine (24) par rapport à la cuve (2) lors du retrait du couvercle (3), ce moyen élastique (29) étant monté à demeure dans la cuve (2).

14. Filtre selon l'une quelconque des revendications précédentes, dans lequel la saillie (27) coulissant dans le canal de vidange (8) est pourvue de moyens d'étanchéité axiale ou radiale.

15. Filtre selon l'une quelconque des revendication précédentes, dans lequel la partie tubulaire (28) de la plati.ne coulisse dans le conduit d'évacuation (7) de l'huile filtrée.

16. Filtre selon la revendication 15, dans lequel un joint annulaire (35) assure une étanchéité entre la partie tubulaire (28) et le conduit d'évacuation (7) de l'huile filtrée.

17. Filtre selon l'une quelconque des revendications précédentes, dans lequel un ressort (29) est interposé entre la cuve (2) et la platine (24) ledit ressort (29) sollicitant ladite platine vers l'insert filtrant (9).

## Claims

1. Oil filter, particularly for an internal combustion engine of a motor vehicle, this filter defining a filtration chamber (4), in which a filter insert (9) is arranged, the filtration chamber (4) being in fluidic communication with a supply pipe (6) for oil to be filtered and a discharge pipe (7) for the filtered oil, this filter comprising a tank (2) and a lid (3) which can be removed from this tank (2), the filter insert (9) defining, in its active filtration position, an inner space and an outer space in the filtration chamber (4), the inner space (11) being in fluidic communication with a discharge pipe (7) for filtered oil and the outer space being in fluidic communication with a supply pipe (6) for oil to be filtered, a drainage channel (8) being closed when the lid (3) is on the tank (2), this drainage channel (8) being open following the removal of the lid (3),
**characterised in that** it comprises a plate (24) which is independent of the filter insert (9) and provided with a tubular section (28) sliding along the axis of the discharge pipe (7) for the filtered oil, this plate (24) also comprising a projection (27) sliding along the axis of the drainage channel (8), the sliding of the tubular section (28) and of the projection (27) arising simultaneously when the lid (3) is placed on or removed from the tank (2), the sliding of the projection (27) along the axis of the drainage channel (8) ensuring the closure of this channel (8) when the lid (3) is in the position closing the chamber (4), and ensuring the opening of this drainage channel (8) when the lid (3) is removed from the tank (2), and **in that** said plate (24) is permanently assembled in the tank (2).

2. Filter according to claim 1, in which the plate (24) abuts a supporting edge of the tank (2) when the lid (3) is removed from the tank (2).

3. Filter according to claim 2, in which the plate comprises projections on its sliding tubular section (28), these projections resting against said supporting edge of the tank.

4. Filter according to claim 3, in which said projections are external and essentially radial in relation to the sliding tubular section (28) and abut said edge of the tank (2) when the lid is removed from the tank (2).

5. Filter according to any one of the claims 2 to 4, in which a part (39) joined to the tank (2) forms said supporting edge.

6. Filter according to claim 5, in which said joined part (39) is crimped into the tank and has an angular cross-section.

7. Filter according to one of the preceding claims, comprising means allowing the rotation of the plate (24) around the sliding axis in the filtered oil discharge channel (7) of the tubular section to be prevented when the lid (3) is removed from the tank (2).

8. Filter according to claim 7, in which said means preventing the rotation of the plate (24) comprise wall elements, arranged on the projection (27) sliding in the drainage channel (8), these wall elements remaining at least partially within the drainage channel (8) when the lid (3) is removed from the tank (2), these wall elements not preventing the drainage.

9. Filter according to claim 8, in which said wall elements provide the projection (27) sliding in the drainage channel with a cruciform cross-section.

10. Filter according to any one of the preceding claims, in which the drainage channel (8) and the discharge pipe (7) for the processed oil are substantially parallel.

11. Filter according to claim 10, in which the discharge pipe (7) for the processed oil is substantially axial, that is to say it extends along the axis of rotation of the filter insert (9).

12. Filter according to any one of the preceding claims, comprising a bypass (10) clipped under the lid (3), the filter insert (9) being pushed against the plate (24) through support of this bypass (10) when the lid (3) is on the tank (2).

13. Filter according to claim 12, in which no elastic means are placed between the bypass (10) and the filter insert (9), and elastic means (29) ensure the sliding of the plate (24) relative to the tank (2) when the lid (3) is removed, these elastic means (29) being permanently assembled in the tank (2).

14. Filter according to any one of the preceding claims, in which the projection (27) sliding in the drainage channel (8) is provided with axial or radial sealing means.

15. Filter according to any one of the preceding claims, in which the tubular section of the plate slides in the discharge pipe (8) for the filtered oil.

16. Filter according to claim 15, in which a sealing ring (35) provides a seal between the tubular section (28) and the discharge pipe (7) for the filtered oil.

17. Filter according to any one of the preceding claims, in which a spring (29) is arranged between the tank (2) and the plate (24), said spring (29) applying said plate towards the filter insert (9).

## Patentansprüche

1. Ölfilter, insbesondere für einen Verbrennungsmotor eines Kraftfahrzeugs, wobei dieser Filter einen Filtrationsraum (4) definiert, in dem ein Filtereinsatz (9) untergebracht ist, wobei der Filtrationsraum (4) mit einer Leitung (6) zum Zuführen von zu filterndem Öl und mit einer Leitung (7) zum Abführen des gefilterten Öls in Fluidverbindung steht, wobei dieser Filter eine Wanne (2) und einen abnehmbaren Deckel (3) auf dieser Wanne (2) umfasst, wobei der Filtereinsatz (9) in seiner aktiven Filtrationsposition in dem Filtrationsraum (4) einen Innenraum und einen Außenraum definiert, wobei der Innenraum (11) mit einer Leitung (7) zum Abführen von gefiltertem Öl in Fluidverbindung steht und der Außenraum mit einer Leitung (6) zum Zuführen von zu filterndem Öl in Fluidverbindung steht, wobei ein Entleerungskanal (8) verschlossen ist, wenn der Deckel (3) auf der Wanne (2) angebracht ist, wobei dieser Entleerungskanal (8) infolge des Abnehmens des Deckels (3) geöffnet wird, **dadurch gekennzeichnet, dass** er eine Platte (24) umfasst, die von dem Filtereinsatz (9) unabhängig und mit einem röhrenförmigen Teil (28) versehen ist, der entlang der Achse der Leitung (7) zum Abführen des gefilterten Öls verschiebbar ist, wobei diese Platte (24) ferner einen Vorsprung (27) aufweist, der entlang der Achse des Entleerungskanals (8) verschiebbar ist, wobei das Verschieben des röhrenförmigen Teils (28) und des Vorsprungs (27) während des Aufsetzens oder des Abhebens des Deckels (3) auf die bzw. von der Wanne (2) gleichzeitig erzielt wird, wobei das Verschieben des Vorsprungs (27) entlang der Achse des Entleerungskanals (8) das Schließen dieses Kanals (8) sicherstellt, wenn sich der Deckel (3) in der Position zum Verschließen des Raums (4) befindet, und das Öffnen dieses Entleerungskanals (8) gewährleistet, wenn der Deckel (3) von der Wanne (2) abgenommen ist, und dass die genannte Platte (24) dauerhaft in der Wanne (2) angebracht ist.

2. Filter nach Anspruch 1, bei dem die Platte (24) dann, wenn der Deckel (3) von der Wanne (2) abgenommen ist, an einem Anlagerand anliegt, mit dem die Wanne (2) versehen ist.

3. Filter nach Anspruch 2, bei dem die Platte an ihrem verschiebbaren röhrenförmigen Teil (28) Vorsprünge aufweist, wobei diese Vorsprünge an dem genannten Anlagerand der Wanne zur Anlage kommen.

4. Filter nach Anspruch 3, bei dem die Vorsprünge außen liegend und zu dem verschiebbaren röhrenförmigen Teil (28) im wesentlichen radial sind und an dem Rand der Wanne (2) zur Anlage kommen, wenn der Deckel von der Wanne (2) abgenommen ist.

5. Filter nach irgendeinem der Ansprüche 2 bis 4, bei dem ein an die Wanne (2) angesetztes Teil (39) den genannten Anlagerand bildet.

6. Filter nach Anspruch 5, bei dem das angesetzte Teil (39) in die Wanne eingesetzt ist und einen winkelprofilförmigen Querschnitt aufweist.

7. Filter nach irgendeinem der vorhergehenden Ansprüche, mit Mitteln, die ermöglichen, die Rotation der Platte (24) um die Verschiebeachse in dem Kanal (7) zum Abführen von gefiltertem Öl des röhrenförmigen Teils (28) zu verhindern, wenn der Deckel (3) von der Wanne (2) abgenommen ist.

8. Filter nach Anspruch 7, bei dem die Mittel, welche die Rotation der Platte (24) verhindern, Wände umfassen, die an dem in dem Entleerungskanal (8) verschiebbaren Vorsprung (27) ausgebildet sind, wobei diese Wände wenigstens teilweise innerhalb des Entleerungskanals (8) bleiben, wenn der Deckel (3) von der Wanne (2) abgenommen ist, wobei diese Wände nicht das Entleeren verhindern.

9. Filter nach Anspruch 8, bei dem die genannten Wände dem in dem Entleerungskanal verschiebbaren Vorsprung (27) einen kreuzförmigen Querschnitt verleihen.

10. Filter nach irgendeinem der vorhergehenden Ansprüche, bei dem der Entleerungskanal (8) und die Leitung (7) zum Abführen des behandelten Öls im wesentlichen parallel verlaufen.

11. Filter nach Anspruch 10, bei dem die Leitung (7) zum Abführen des behandelten Öls im wesentlichen axial verläuft, d.h. sich entlang der Rotationsachse des Filtereinsatzes (9) erstreckt.

12. Filter nach irgendeinem der vorhergehenden Ansprüche, mit einem Bypass (10), der unter dem Deckel (3) festgeclipst ist, wobei der Filtereinsatz (9) - wenn der Deckel (3) an der Wanne (2) angebracht ist - durch Anlage dieses Bypasses (10) gegen die Platte (24) gedrückt wird.

13. Filter nach Anspruch 12, bei dem zwischen dem Bypass (10) und dem Filtereinsatz (9) kein Federmittel angeordnet ist, und ein Federmittel (29) das Verschieben der Platte (24) gegenüber der Wanne (2) bei Abnehmen des Deckels (3) sicherstellt, wobei dieses Federmittel (29) dauerhaft in der Wanne (2) angebracht ist.

14. Filter nach irgendeinem der vorhergehenden Ansprüche, bei dem der in dem Entleerungskanal (8) verschiebbare Vorsprung (27) mit Mitteln zur axialen oder radialen Abdichtung versehen ist.

15. Filter nach irgendeinem der vorhergehenden Ansprüche, bei dem sich der röhrenförmige Teil (28) der Platte in der Leitung (7) zum Abführen des gefilterten Öls verschieben lässt.

16. Filter nach Anspruch 15, bei dem eine Ringdichtung (35) eine Dichtigkeit zwischen dem röhrenförmigen Teil (28) und der Leitung (7) zum Abführen des gefilterten Öls gewährleistet.

17. Filter nach irgendeinem der vorhergehenden Ansprüche, bei dem eine Feder (29) zwischen der Wanne (2) und der Platte (24) eingesetzt ist, wobei die Feder (29) die Platte in Richtung des Filtereinsatzes (9) belastet.
